# EUROPEAN PATENT APPLICATION

(11) **EP 4 246 220 A1**
(43) Date of publication of application: **20.09.2023**
(21) Application number: 21891923.1
(22) Date of filing: 10.11.2021
(51) Int. Cl.: G02F 1/13357, G02F 1/1333, G02F 1/1335

(54) **LIQUID CRYSTAL DISPLAY DEVICE**

(30) Priority: 13.11.2020 JP 2020189807
(71) Applicant: Kyocera Corporation, Kyoto-shi Kyoto 612-8501 (JP)
(72) Inventor: MORISHITA, Katsuhiko, Kyoto-shi, Kyoto 612-8501 (JP); MOCHIZUKI, Yu, Kyoto-shi, Kyoto 612-8501 (JP); TANAKA, Yoshiki, Kyoto-shi, Kyoto 612-8501 (JP); KAMOSHIDA, Kenta, Kyoto-shi, Kyoto 612-8501 (JP); MORITA, Tetsuya, Kyoto-shi, Kyoto 612-8501 (JP); MURATA, Mitsuhiro, Kyoto-shi, Kyoto 612-8501 (JP)
(74) Representative: TBK
(86) International application number: PCT/JP2021/041414
(87) International publication number: WO 2022/102678

(57) **Abstract**

A liquid crystal display device includes a light source (2) including a plurality of light emitters (13) each to emit a laser beam and an emission surface through which the laser beam is emittable from each of the plurality of light emitters, and a liquid crystal panel (3) on the emission surface to control an amount of the laser beam incident through the emission surface to be transmitted for display. Each of the plurality of light emitters emits the laser beam at an incident polarization angle on the liquid crystal panel maximizing a transmittance of the laser beam through the liquid crystal panel.

## Description

### TECHNICAL FIELD

The present disclosure relates to a liquid crystal display (LCD) device.

### BACKGROUND OF INVENTION

A known technique is described in, for example, Patent Literature 1.

### CITATION LIST

### PATENT LITERATURE

Patent Literature 1: Japanese Unexamined Patent Application Publication No. 2018-18710

### SUMMARY

In an aspect of the present disclosure, a liquid crystal display device includes a light source including a plurality of light emitters each to emit a laser beam and an emission surface through which the laser beam is emittable from each of the plurality of light emitters, and a liquid crystal panel on the emission surface to control an amount of the laser beam incident through the emission surface to be transmitted for display. Each of the plurality of light emitters emits the laser beam at a polarization angle maximizing a transmittance of the laser beam through the liquid crystal panel.

In another aspect of the present disclosure, a liquid crystal display device includes a light source including a plurality of light emitters each to emit a laser beam and an emission surface through which the laser beam is emittable from each of the plurality of light emitters, and a liquid crystal panel on the emission surface to control an amount of the laser beam incident through the emission surface to be transmitted for display. The liquid crystal panel transmits the laser beam with retardation maximizing a light transmittance of the laser beam.

### BRIEF DESCRIPTION OF THE DRAWINGS

The objects, features, and advantages of the present disclosure will become more apparent from the following detailed description and the drawings.
FIG. 1 is a graph describing the transmission characteristics expected from a liquid crystal display (LCD) device according to one or more embodiments of the present disclosure.
FIG. 2 is a schematic cross-sectional view of a liquid crystal panel.
FIG. 3 is a graph showing the relationship between the transmittance of three colors of monochromatic light in laser beams used in the liquid crystal panel and retardation.
FIG. 4 is a diagram describing incident polarization angles of laser beams R, G, and B incident on a liquid crystal panel in an LCD device according to another embodiment of the present disclosure.
FIG. 5A is a graph showing the relationship between the incident polarization angle of the laser beam B on the liquid crystal panel and the transmittance.
FIG. 5B is a graph showing the relationship between the incident polarization angle of the laser beam G on the liquid crystal panel and the transmittance.
FIG. 5C is a graph showing the relationship between the incident polarization angle of the laser beam R on the liquid crystal panel and the transmittance.

### DESCRIPTION OF EMBODIMENTS

A liquid crystal display (LCD) device with the structure that forms the basis of an LCD device according to one or more embodiments of the present disclosure includes a light source and a liquid crystal panel. The light source is located opposite to and at a predetermined distance from a display surface of the liquid crystal panel. The light source includes, as light emitters, semiconductor lasers that each emit one of a red laser beam, a blue laser beam, or a green laser beam. In the liquid crystal panel, a single pixel includes three subpixels corresponding to the respective three primary colors, or red (R), green (G), and blue (B). The subpixels each transmit a laser beam with the corresponding color with a different wavelength. The same cell gap is set for each of the subpixels.

To respond to, for example, rough images or deteriorating characteristics of moving images that do not allow smooth motion, liquid crystal panels nowadays are to be driven at high frequencies to increase the number of images (the number of frames) displayed per second and also to achieve the picture quality with higher definition. In response to the above issue, a known technique displays a full-line image on a display surface by scanning in a sub-scanning direction Y in parallel with scanning in a main scanning direction X multiple times on the display surface. A moving image thus has a limited number of images (number of frames) that can be displayed per second and thus involves scanning to be performed more times for higher definition, taking more time. LCD devices that can display high-definition images with high color purity are awaited.

The LCD device according to one or more embodiments of the present disclosure will now be described with reference to the accompanying drawings.

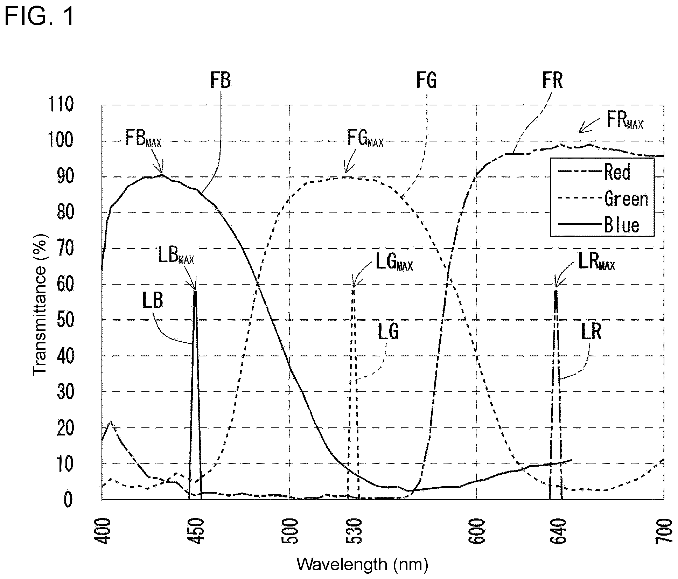

FIG. 1 is a graph describing the transmission characteristics expected from the LCD device according to one embodiment of the present disclosure. In the graph, the vertical axis indicates the transmittance in relative values, and the horizontal axis indicates the wavelength. The graph shows the spectral characteristics of the transmittances LR, LG, and LB of three colors of red (R) monochromatic light, green (G) monochromatic light, and blue (B) monochromatic light included in laser beams emitted from light emitters 13, and the transmittances FR, FG, and FB of color filters 6 for the respective colors. As in the graph, the monochromatic light of a red laser beam has a wavelength λR of about 640 nm, the monochromatic light of a green laser beam has a wavelength λG of about 530 nm, and the monochromatic light of a blue laser beam has a wavelength λB of about 450 nm. The transmittance LR of the red laser beam has a spectral distribution in a narrow wavelength bandwidth including a single maximum peak LR_{MAX}. The transmittance LG of the green laser beam has a spectral distribution in a narrow wavelength bandwidth including a single maximum peak LG_{MAX}. The transmittance LB of the blue laser beam has a spectral distribution in a narrow wavelength bandwidth including a single maximum peak LB_{MAX}. The graph also shows the spectral distribution of each color filter spectroscopically measured under illumination with an illuminant C (with the correlated color temperature of 6774 K), which is one of the standard illuminants. When light is transmitted through a red color filter 6R under illumination with the illuminant C, the transmittance FR of the red color filter 6R has a convex curved spectral distribution that gradually decreases from a maximum peak FRₘₐₓ. When light is transmitted through a green color filter 6G under illumination with the illuminant C, the transmittance FG of the green color filter 6G has a convex curved spectral distribution that gradually decreases from a maximum peak FGₘₐₓ. When light is transmitted through a blue color filter 6B under illumination with the illuminant C, the transmittance FB of the blue color filter 6B has a convex curved spectral distribution that gradually decreases from a maximum peak FBₘₐₓ.

As also in the graph, the red laser beam, the green laser beam, and the blue laser beam each have a narrow spectral distribution. The laser beams used as backlight for a liquid crystal panel 3 can thus achieve higher color purity in subpixels than light from, for example, light emitting diodes (LEDs) used in a light source. Examples of the light emitters that emit laser beams include gas lasers, solid-state lasers, and semiconductor lasers, of which the gas lasers may be used.

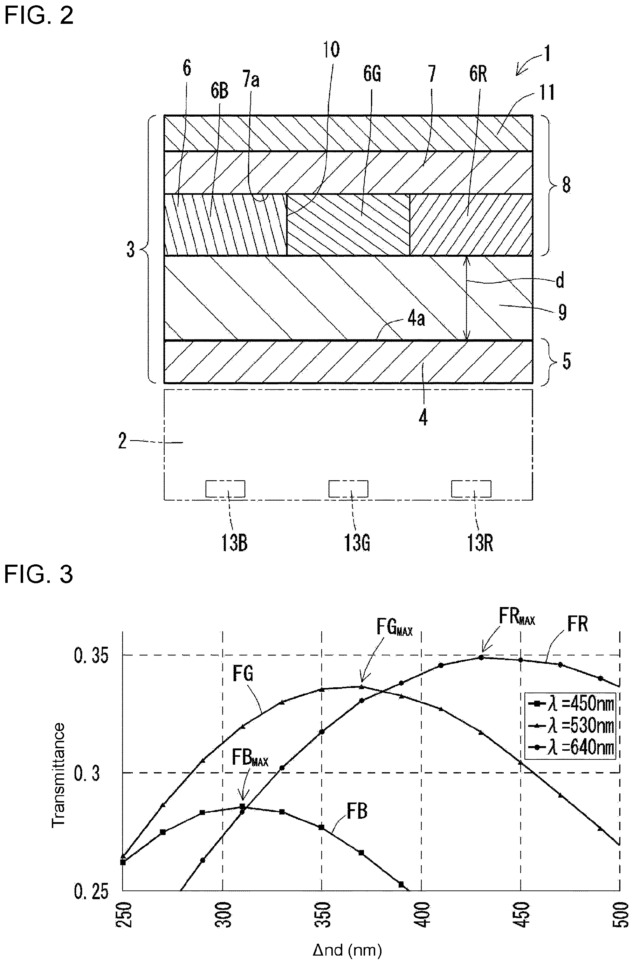

FIG. 2 is a schematic cross-sectional view of the liquid crystal panel 3. FIG. 3 is a graph showing the relationship between the transmittances of three colors of monochromatic light in laser beams used in the liquid crystal panel 3 and retardation (Δnd). For ease of illustration, in FIG. 2, components such as a pixel electrode, a common electrode, a thin-film transistor (TFT) element, an insulating layer, and wires are not illustrated. In the present embodiment, retardation refers to a phase difference of light resulting from the birefringence of the liquid crystal panel 3 that transmits light from the light source.

In the present embodiment, an LCD device 1 includes a light source 2 and the liquid crystal panel 3. The light source 2 includes multiple light emitters 13 that emit laser beams and includes an emission surface through which light beams from the multiple light emitters 13 are emitted. The liquid crystal panel 3 is on the emission surface and controls the amounts of laser beams incident through the emission surface to be transmitted for display. The liquid crystal panel 3 transmits a laser beam with retardation that maximizes the transmittance of the laser beam. In FIG. 2, the light source 2 is a direct light source that includes the light emitters 13 immediately below the liquid crystal panel 3. In some embodiments, the light source 2 may be a sidelight light source that includes the multiple light emitters 13 on a side surface of a light guide plate (not illustrated). Although the light source 2 is illustrated in a simplified manner, the light source 2 includes at least the multiple light emitters 13 (light emitters 13R, 13G, and 13B corresponding to red, green, and blue light in the present embodiment), the light guide plate, and a diffuser panel on the surface of the light guide plate facing the liquid crystal panel.

The liquid crystal panel 3 includes a TFT array substrate 5 including a glass substrate 4 with a first surface 4a on which pixel units each including a TFT element are arranged in a matrix, a color filter substrate 8 including a glass substrate 7 with a second surface 7a on which the color filters 6 and black matrixes 10 are arranged, and a liquid crystal layer 9 filled with liquid crystal and sealed. The TFT array substrate 5 and the color filter substrate 8 are attached to be spaced from and face each other. The liquid crystal layer 9 is between the TFT array substrate 5 and the color filter substrate 8. A polarizing plate 11 including a polarization axis in a specific direction is on a surface of the glass substrate 7 opposite to the liquid crystal layer 9. In the present embodiment, for example, the polarizing plate 11 divides, along its polarization axis in the specific direction, light passing through the polarizing plate 11 into two beams of linearly polarized light orthogonal to each other. When the principal refractive indices of the polarizing plate 11 are defined as nx and ny (nx > ny), the incident linearly polarized light on the polarizing plate 11 may be divided into light traveling along a slow axis x corresponding to the principal refractive index nx and light traveling along a fast axis y corresponding to the principal refractive index ny. One or both of the slow axis x and the fast axis y may be used as the polarization axis in the specific direction.

The liquid crystal mode is, for example, a vertical alignment (VA) mode. The liquid crystal mode is not limited to this mode. Various liquid crystal modes may be used, including a twisted nematic (TN) mode and a homogeneous mode. The display mode may be a normally black mode, in which the light transmittance or the luminance is lower in an off-state than in an on-state, or a normally white mode, in which the light transmittance or the luminance is higher in an off-state than in an on-state. The display mode may be changed by setting the polarization direction of the polarizing plate 11 and the phase difference in the liquid crystal layer 9 as appropriate.

The color filter substrate 8 includes, on the second surface 7a of the glass substrate 7, a common electrode to generate a vertical electric field applied to the liquid crystal layer 9 between the common electrode and pixel electrodes. For an in-plane switching (IPS) liquid crystal panel, the common electrode is in the same plane as the pixel electrodes of the pixel units in the TFT array substrate 5 to generate a transverse electric field. For a fringe field switching (FFS) liquid crystal panel, the common electrode is above or below the pixel electrodes of the pixel units in the TFT array substrate 5 with an insulating layer between them to generate a fringe field.

The red (R) color filter 6R, the green (G) color filter 6G, and the blue (B) color filter 6B corresponding to each pixel (subpixels) are on the second surface 7a of the glass substrate 7 in the color filter substrate 8. To prevent beams of light passing through each pixel (subpixels) from interfering with one another, the black matrixes 10 are arranged at the boundaries between adjacent color filters 6R, 6G, and 6B. In the present embodiment, the liquid crystal panel 3 in the LCD device 1 includes cell gaps d between the color filters 6R, 6G, and 6B and the pixel electrodes on the first surface 4a of the glass substrate 4 in the TFT array substrate 5. In one example, with the liquid crystal layer 9 with a birefringence index Δn of 0.1199, the cell gap d is set to 3.59 µm for the color filter 6R, 3.09 µm for the color filter 6G, and 2.59 µm for the color filter 6B.

The retardation in the liquid crystal layer 9 is set to an optimum value at the wavelength of a laser beam from each of the light emitters 13R, 13G, and 13B in the light source 2 to improve the transmittance of the laser beam. In this case, the birefringence indices Δn of the color filters 6R, 6G, and 6B may be changed, or the cell gaps d may be changed. In the present embodiment, the cell gap d is changed and is set to a value appropriate for each of the color filters 6R, 6G, and 6B. Laser beams are polarizable. This structure eliminates a polarizing plate near the light source 2 serving as a backlight for the liquid crystal panel 3. Polarizable laser beams are emitted from the light emitters 13 mounted on a component-mount board with their polarization axes adjusted to be orthogonal to the polarization axis (the slow axis, the fast axis, or both) of the polarizing plate 11 above.

In the present embodiment, the LCD device 1 includes semiconductor lasers for red, green, and blue light in the light source as a backlight for the liquid crystal panel 3 to improve the color purity. With retardation set to achieve the maximum transmittance of laser beams, the LCD device 1 can display high-luminance and high-definition images. The term maximum herein includes the range below the peak with a maximum value by about 5%.

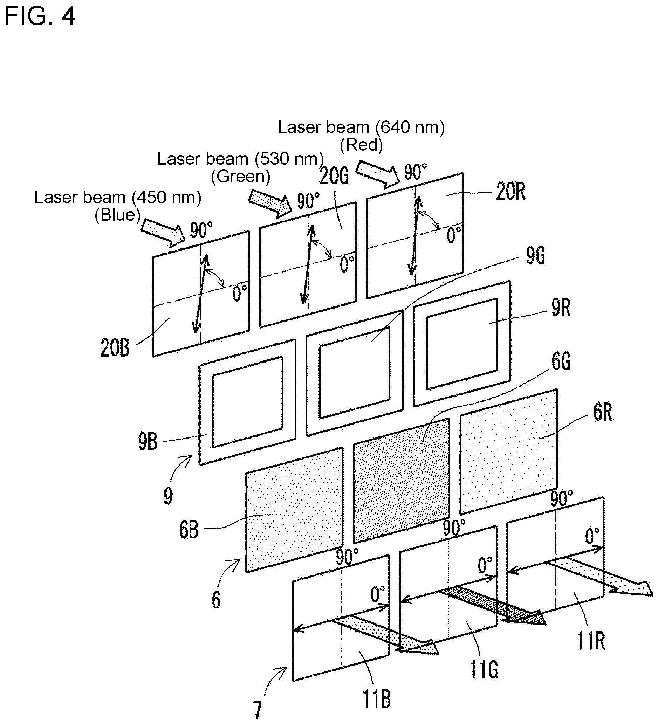

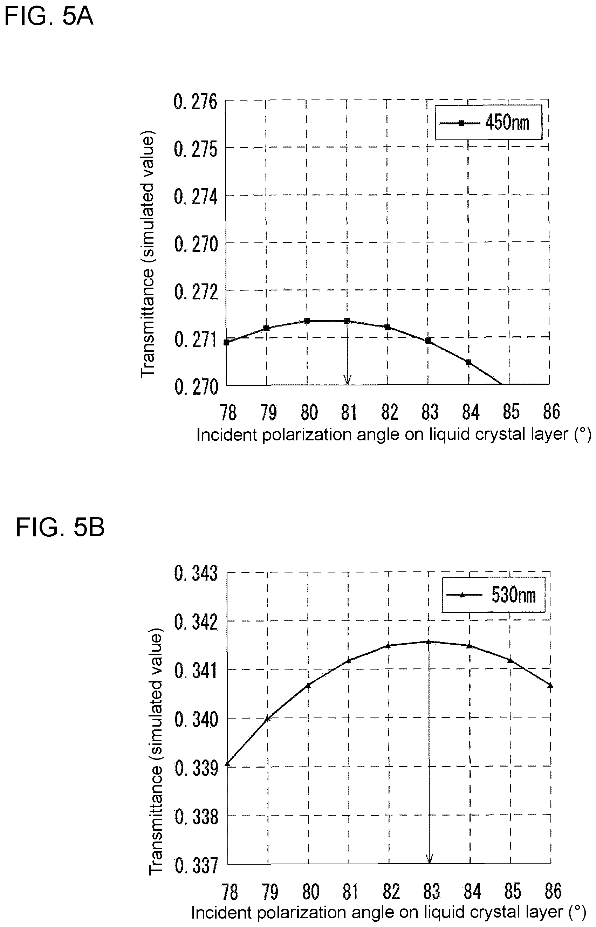

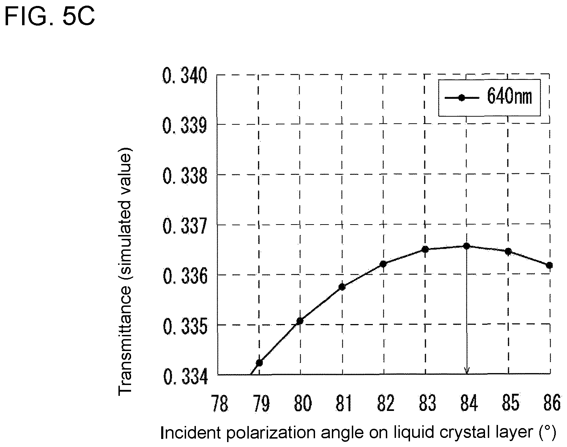

FIG. 4 is a diagram describing incident polarization angles of laser beams R, G, and B incident on a liquid crystal panel 3 in an LCD device 1 according to another embodiment of the present disclosure. FIG. 5A is a graph showing the relationship between the incident polarization angle of the laser beam B on the liquid crystal panel 3 and the transmittance. FIG. 5B is a graph showing the relationship between the incident polarization angle of the laser beam G on the liquid crystal panel 3 and the transmittance. FIG. 5C is a graph showing the relationship between the incident polarization angle of the laser beam R on the liquid crystal panel 3 and the transmittance. The same reference signs denote the components corresponding to those in the above embodiment and will not be described repeatedly.

In the present embodiment, the LCD device 1 includes a light source 2 and the liquid crystal panel 3. The light source 2 includes multiple light emitters 13 that emit laser beams and includes an emission surface through which light beams from the multiple light emitters 13 are emitted. The liquid crystal panel 3 is on the emission surface and controls the amounts of laser beams incident through the emission surface to be transmitted for display. The liquid crystal panel 3 transmits a laser beam with a birefringence index that maximizes the light transmittance of the laser beam.

With an example method for adjusting the incident polarization angles of the multiple light emitters 13 on the liquid crystal panel 3 to achieve the maximum transmittance of the liquid crystal panel 3, the incident polarization angles are set using luminance data for the angles of the light emitters 13 (laser diodes, or LDs) at which the liquid crystal panel 3 has the maximum luminance. In FIGs. 5A, 5B, and 5C, the vertical axis indicates the transmittance (simulated values). Curves with characteristics similar to the curves in the figures can be obtained for the luminance on the vertical axis in the luminance data. When a laser beam is gradually rotated while being emitted toward the polarizing plate 11 with the polarization axis in a specific direction, transmitted light can have various intensities. The transmitted light has the highest intensity at the incident polarization angle at which the transmitted light is incident along the transmission axis of the polarizing plate 11, and has the lowest intensity at the incident polarization angle at which the transmitted light is incident perpendicular to the transmission axis of the polarizing plate. The emission angles of the light emitters 13 are determined in this manner. In FIGs. 5A, 5B, and 5C, the incident polarization angle of 90° is the angle to the orientation direction of the back surface of the liquid crystal layer 9 in the liquid crystal panel 3.

For example, the incident polarization angle of a blue laser beam B with a wavelength of 450 nm at the maximum transmittance is 81°. The incident polarization angle of a green laser beam G with a wavelength of 530 nm at the maximum transmittance is 83°. The incident polarization angle of a red laser beam R with a wavelength of 640 nm at the maximum transmittance is 84°. The incident polarization angles of the red laser beam R, the green laser beam G, and the blue laser beam B on the liquid crystal panel 3 are respectively set to 81°, 83°, and 84°. The red laser beam R, the green laser beam G, and the blue laser beam B, after passing through the liquid crystal layers 9R, 9G, and 9B in the liquid crystal 9 and color filters 6R, 6G, and 6B, are emitted through polarizing plates 11R, 11G, and 11B at the maximum transmittance with the polarization axes parallel to the transmission axes of the polarizing plates 11R, 11G, and 11B.

In the present embodiment, the LCD device 1 includes semiconductor lasers for red, green, and blue light in the light source as a backlight for the liquid crystal panel 3 to improve the color purity. With retardation set to achieve the maximum transmittance of laser beams, the LCD device 1 can display high-luminance and high-definition images.

The present disclosure may be implemented in the following forms.

In an embodiment of the present disclosure, a liquid crystal display device includes a light source including a plurality of light emitters each to emit a laser beam and an emission surface through which the laser beam is emittable from each of the plurality of light emitters, and a liquid crystal panel on the emission surface to control an amount of the laser beam incident through the emission surface to be transmitted for display. Each of the plurality of light emitters emits the laser beam at a polarization angle maximizing a transmittance of the laser beam through the liquid crystal panel.

In another embodiment of the present disclosure, a liquid crystal display device includes a light source including a plurality of light emitters each to emit a laser beam and an emission surface through which the laser beam is emittable from each of the plurality of light emitters, and a liquid crystal panel on the emission surface to control an amount of the laser beam incident through the emission surface to be transmitted for display. The liquid crystal panel transmits the laser beam with retardation maximizing a light transmittance of the laser beam.

The liquid crystal display device according to one or more embodiments of the present disclosure can improve the color purity and display high-definition images with high quality.

Although the embodiments of the present disclosure have been described in detail, the present disclosure is not limited to the embodiments described above, and may be changed or modified in various manners without departing from the spirit and scope of the present disclosure. The components described in the above embodiments may be entirely or partially combined as appropriate unless any contradiction arises.

### INDUSTRIAL APPLICABILITY

The LCD device according to one or more embodiments of the present disclosure can be used in various electronic devices as an active matrix LCD device. Such electronic devices include, for example, head-up displays, projectors, automatic route guidance systems (car navigation systems), ship route guidance systems, aircraft route guidance systems, smartphones, mobile phones, tablets, personal digital assistants (PDAs), video cameras, digital still cameras, electronic organizers, electronic books, electronic dictionaries, personal computers, copiers, terminals for game devices, television sets, product display catalogues, price display tags, programmable display devices for industrial use, car audio systems, digital audio players, facsimile machines, printers, automatic teller machines (ATMs), vending machines, and digital display clocks.

### REFERENCE SIGNS

1 liquid crystal display device
2 light source
3 liquid crystal panel
4 glass substrate
4a first surface
5 TFT array substrate
6; 6R, 6G, 6B color filter
7 glass substrate
7a second surface
8 color filter substrate
9 liquid crystal
9R, 9G, 9B liquid crystal layer
10 black matrix
11R, 11G, 11B polarizing plate
13 light emitter
LR, LG, LB transmittance of laser beam
FR, FG, FB transmittance of color filter

## Claims

1. A liquid crystal display device, comprising:
a light source including a plurality of light emitters each to emit a laser beam, the light source including an emission surface through which the laser beam is emittable from each of the plurality of light emitters; and
a liquid crystal panel on the emission surface, the liquid crystal panel being configured to control an amount of the laser beam incident through the emission surface to be transmitted for display,
wherein each of the plurality of light emitters emits the laser beam at a polarization angle maximizing a transmittance of the laser beam through the liquid crystal panel.

2. A liquid crystal display device, comprising:
a light source including a plurality of light emitters each to emit a laser beam, the light source including an emission surface through which the laser beam is emittable from each of the plurality of light emitters; and
a liquid crystal panel on the emission surface, the liquid crystal panel being configured to control an amount of the laser beam incident through the emission surface to be transmitted for display,
wherein the liquid crystal panel transmits the laser beam with retardation maximizing a light transmittance of the laser beam.

3. The liquid crystal display device according to claim 1 or claim 2, wherein
the plurality of light emitters includes a first light emitter to emit a laser beam with a first wavelength, a second light emitter to emit a laser beam with a second wavelength shorter than the first wavelength, and a third light emitter to emit a laser beam with a third wavelength shorter than the first wavelength and longer than the second wavelength.

4. The liquid crystal display device according to any one of claims 1 to 3, wherein
each of the plurality of light emitters is a semiconductor laser.

5. The liquid crystal display device according to any one of claims 1 to 4, further comprising:
a polarizing plate on a second surface of the liquid crystal panel, the second surface being opposite to a first surface facing the emission surface, the polarizing plate including a polarization axis on the second surface perpendicular to a polarization axis of the laser beam incident on the first surface.
